Europäisches Patentamt

(19) European Patent Office

Office européen des brevets

(11) Publication number: **0 116 714**
A2

# (12) EUROPEAN PATENT APPLICATION

(21) Application number: **83112828.5**

(22) Date of filing: **20.12.83**

(51) Int. Cl.³: **F 42 C 15/40**
**G 01 P 13/00**

(30) Priority: **23.12.82 US 452534**

(43) Date of publication of application:
**29.08.84 Bulletin 84/35**

(84) Designated Contracting States:
**CH DE FR GB IT LI SE**

(71) Applicant: **HONEYWELL INC.**
**Honeywell Plaza**
**Minneapolis Minnesota 55408(US)**

(72) Inventor: **Wendler, Alan H.**
**8456 Sheridan Avenue North**
**Brooklyn Park, Minn. 55444(US)**

(74) Representative: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) Magnetic revolution sensor.

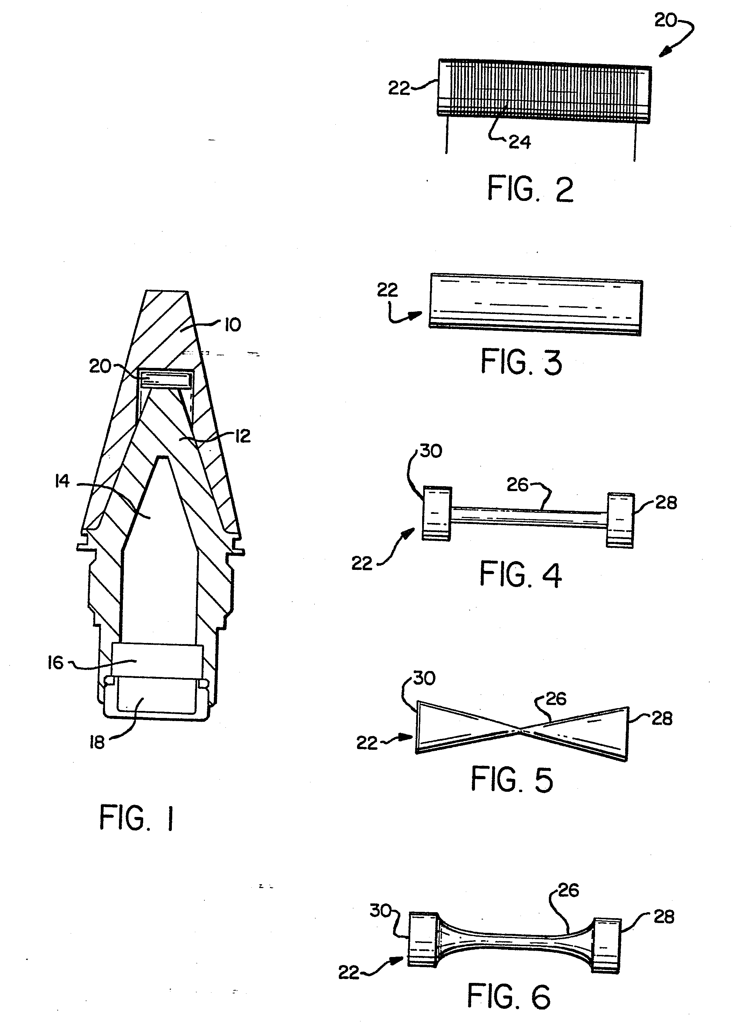

(57) A revolution sensor comprises a unitary pole piece (22) of ferromagnetic material, including a central portion (26) of reduced cross sectional area extending between ends (28, 30) of larger cross sectional area, and a helical electrically conductive winding (24) on the central portion of the pole piece (Figure 2).

FIG. 2

EP 0 116 714 A2

HONEYWELL INC.

Honeywell Plaza

Minneapolis, Minn. USA

December 20, 1983

A2109958 EP

Hz/ep

**0116714**

TITLE MODIFIED see front page

Revolution Sensor

The present invention relates to a revolution sensor according to the preamble of claim 1.

In the field of projectile munitions it is known to rifle the barrel of a firing piece, to impart to a round fired therefrom a stabilizing spin about its axis. It is also known to mount in the projectile coils which cut the earth's magnetic field, as the round spins, to arm the round, by disabling a safing device, when the round has revolved a predetermined number of times corresponding to a safe distance of the round from the piece, the coils having air cores and being located between the ogive and the penetrator of the round, with their axes transverse to the axis of the round at oblique angles.

Departing from such a known revolution sensor, it is the object of the present invention to improve its operation. This object is achieved according to the characterizing features of claim 1. Further advantageous embodiments of the present invention may be taken from the sub-claims.

It has been found that improved operation of the revolution sensor results if the air core coils are replaced by a sensor having a core or pole piece of ferromagnetic material on which an electrically conductive helical winding is formed. Several designs for the pole piece have been devised, preferably including central portions of reduced cross sectional area between ends of larger cross sectional area, with the windings lying within the envelope defined by the ends.

With respect to the figures of the attached drawing, embodiments of the revolution sensor according to the present invention shall be further described. It shows:

|  |  |
|---|---|
| Figure 1 | a fragmentary view in axial section of a round of projectile ammunition embodying the invention; |
| Figure 2 | a sensor according to the invention; and |
| Figures 3 to 6 | possible configurations for a core or pole piece usable in the sensor according to Figure 2. |

The forward portion of a projectile round is shown diagramatically in Figure 1 to comprise an ogive 10, a penetrator 12, a fuse electronics assembly 14, and a safing and arming device 16 for connection to a booster

18 to fire the main explosive, which is contained in the rearward portion of the round, not shown. The components just enumerated are conventional in munitions of this sort.

Mounted on penetrator 12 to extend transversely, and preferably at right angles with respect to the spin axis of the round, is a revolution sensor 20 according to the invention. As suggested in FIGURE 2, sensor 20 comprises a core or pole piece 22 of ferromagnetic material on which there is formed a helical, electrically conducting winding 24. While core 22 may be cylindrical, as shown in FIGURE 3, I prefer that the core be formed, as shown in FIGURES 4, 5, and 6, to have a central portion 26 of reduced cross sectional area, preferably circular, extending between ends 28 and 30 of a larger cross sectional area. The dimensions and geometry are not critical, and may be selected to result in a sensor with size, weight, and performance characteristics suitable for a specific application, but the pole piece should be unitary with no sharp discontinuities. The pole pieces of FIGURES 4, 5, and 6 will be referred to hereafter as of "dumbbell,", "hourglass," and "logarithmic" configurations respectively.

Use of small diameter wire for winding 24 indirectly increases the sensitivity of the sensor, because more turns can be applied per unit volume than when using larger diameter wire.

The configurations of FIGURES 4, 5, and 6 enable simple sensor construction and installation, because the wire can be applied until the device generally becomes essentially cylindrical, resulting in a device with easy handling and mounting characteristics. Furthermore, large scale production of these sensors can be highly automated, because programmed lathes can produce the cores, automatic coil winders can apply the proper amounts of wire to the cores, and the units can then be encapsulated with solder lugs for easy component connection to the electronic assembly.

When the round is fired from a piece, the rifling of the piece causes the round to spin or revolve, and the winding 24 of sensor 20 cuts the earth's magnetic field, generating a sinusoidal signal with frequency directly proportional to piece spin rate for transmission to electronic assembly 14. The relation of the distance traveled by the round to the number of revolutions passed through is known, and the electronic assembly functions as is also well known to disable the safing and enable the arming of the round after a predetermined number of revolutions, corresponding to a safe distance from the piece.

From the foregoing it will be evident that a new, accurate and efficient revolution sensor has been providedwhich is readily constructed and installed, and which has a core of ferromagnetic material in one of several preferred configurations.

0116714

Claims:

1. Revolution sensor comprising a coil on a core for mounting in a body rotatable about an axis in the earth's magnetic field, in particular for mounting in a projectile, c h a r a c t e r i z e d  i n  t h a t  said core (22) consists of a unitary pole piece of ferromagnetic material including a central portion (26) of reduced cross sectional area extending between ends (28, 30) of larger cross sectional area, and a helical electrically conductive winding (24) on said central portion (26) of said pole piece (22).

2. Sensor according to claim 1, c h a r a c t e r i z e d  i n  t h a t  said pole piece (22) extends transversely relative to said axis.

3. Sensor according to claim 1, c h a r a c t e r i z e d  i n  t h a t  said pole piece (22) is of dumbbell configuration.

4. Sensor according to claim 1, c h a r a c t e r i z e d  i n  t h a t  said pole piece (22) is of hourglass configuration.

5. Sensor according to claim 1, c h a r a c t e r i z e d  i n  t h a t  said pole piece (22) is of logarithmic configuration.

6. Sensor according to claim 1, c h a r a c t e r i z e d  i n  t h a t  said winding (24) lies within the envelope defined by said ends (28, 30) of said pole piece (26).

0116714

FIG. 2

FIG. 3

FIG. 4

FIG. 5

FIG. 1

FIG. 6